# EUROPÄISCHE PATENTSCHRIFT

(11) **EP 1 506 242 B1**
(45) Veröffentlichungstag und Bekanntmachung des Hinweises auf die Patenterteilung: **13.08.2008**
(21) Anmeldenummer: 03727421.4
(22) Anmeldetag: 02.05.2003
(51) Int. Cl.: C08G 18/08, C08G 18/66, C08G 18/73, C09D 175/04

(54) **WÄSSRIGE POLYURETHANZUBEREITUNGEN**
AQUEOUS POLYURETHANE PREPARATIONS
PREPARATIONS DE POLYURETHANNE AQUEUSES

(30) Priorität: 13.05.2002 DE 10221220
(43) Veröffentlichungstag der Anmeldung: 16.02.2005
(73) Patentinhaber: BASF SE, 67056 Ludwigshafen (DE)
(72) Erfinder: TREIBER, Reinhard, 69181 Leimen (DE); HÄBERLE, Karl, 67346 Speyer (DE); HÖRNER, Klaus, Dieter, 68623 Lampertheim (DE); BINGEMANN, Rudolf, 67136 Fussgönheim (DE); HOFER, Bruno, 67067 Ludwigshafen (DE)
(86) Internationale Anmeldenummer: PCT/EP2003/004604
(87) Internationale Veröffentlichungsnummer: WO 2003/095517

(56) Entgegenhaltungen:
- EP-A- 0 204 938
- EP-A- 1 072 652
- US-A- 5 610 232

## Beschreibung

Die zur Beschichtung von Substraten wie z.B. Holz, Metall, Kunststoff, Textilien oder Leder verwendeten Polyurethandispersionen ergeben in der Regel hochglänzende Polymerfilme.

Bei einigen Anwendungen, z. B. bei der Beschichtung von Automobilledern und Polsterledern, sind jedoch Beschichtungen mit einem möglichst geringen Glanzgrad gefragt. Dieser geringe Glanzgrad soll sich auch durch Reibung, wie sie bei der Benutzung auftritt, nicht verändern; das heißt, die Beschichtung soll in möglichst geringem Maße rückpolierbar sein. Darüber hinaus soll die Beschichtung keine Veränderung des Farbtones des Substrates bewirken; so soll z.B. ein schwarz gefärbtes Leder durch die Beschichtung nicht grau werden. EP 1072652 A2 beschreibt Polyurethandispersionen als BeschichtungsMittel mit einem mittleren Teilchendurchmesser von 20 - 1000 nm zur Beschichtung von Metall-, Glas- und Kunststoffgegenständen. Beschichtung von Leder wird nicht offenbart und würde auch keine mattierten Leder ergeben.
Die DE-A1 4 016 713 beschreibt Mischungen von Polymerdispersionen, die unterhalb von 70°C filmbildend sind, mit
Polyurethan-Polyharnstoffdispersionen, die unterhalb von 70°C nicht filmbildend sind, zur Herstellung mattierter Beschichtungen. Nachteilig an diesen Mischungen ist, dass zu ihrer Herstellung zwei verschiedene Dispersionen bereitgestellt werden müssen, was erhöhten synthetischen Aufwand bedeutet.

Die DE-A1 4 017 525 beschreibt wässrige Polyurethanzubereitungen, die ein Polyurethan enthalten, das aus wenigstens einem keine lateralen Seitengruppen aufweisenden Diisocyanat und wenigstens einem wenigstens eine laterale Seitengruppe aufweisenden Diisocyanat erhalten wird. Die Beschichtungen, die mit diesen Dispersionen erhalten werden, genügen jedoch bezüglich der Rückpolierbarkeit nicht mehr heutigen Ansprüchen. Weiterhin zeigen die so erhältlichen Dispersionen Stabilitätsprobleme.

Die Aufgabe der Erfindung bestand also darin, Polyurethan-Dispersionen zur Verfügung zu stellen, die folgenden Anforderungen genügen:
- daraus erhaltene Beschichtungen sollen einen möglichst niedrigen Glanzgrad aufweisen.
- der Glanzgrad soll sich durch Reiben nicht wesentlich verändern (keine Rückpolierbarkeit).
- der Farbton des Substrats soll durch die Beschichtung nicht wesentlich verändert werden.
- die genannten Eigenschaften sollen durch Verwendung einer einzigen Polyurethan-Dispersion erhalten werden.
- mit den Polyurethan-Dispersionen behandelte Leder sollen gute mechanische Eigenschaften aufweisen.

Die Aufgabe wurde gelöst durch wässrige Polyurethanzubereitungen, enthaltend 10 bis 60 Gew.-% wenigstens eines Polyurethans A, das aufgebaut ist aus
a) wenigstens einem keine lateralen Alkylgruppen aufweisenden organischen Isocyanat [Monomere I],
b) gegebenenfalls wenigstens einem wenigstens eine laterale Alkylgruppe aufweisenden organischen Isocyanat [Monomere II],
c) wenigstens einem mindestens zweiwertigen Alkohol eines zahlenmittleren Molekulargewichts von 400 bis 6000 [Monomere III],
d) wenigstens einem mindestens zweiwertigen Alkohol eines zahlenmittleren Molekulargewichts von 62 bis 399 [Monomere IV],
e) wenigstens einer wenigstens eine Hydroxygruppe aufweisende Carbonsäure [Monomere V],
f) keinem, einem oder mehreren wenigstens zwei >N-H-Gruppen aufweisenden Polyamin [Monomere VI],
g) keiner, einer oder mehreren wenigstens eine alkoholische OH-Gruppe und wenigstens eine >N-H-Gruppe aufweisenden Verbindung [Monomere VII] und
h) keinem, einem oder mehreren einwertigen Polyetheralkohol [Monomere VIII]
mit der Maßgabe, dass die Mengen der eingebauten Monomeren I bis VIII so bemessen sind, dass die
(-OH + >N-H) / NCO-Äquivalentverhältnisse für die eingebauten
- Monomere III/Monomere I+II: 0,1 bis 0,75,
- Monomere IV/Monomere I+II: 0,2 bis 0,8,
- Monomere V/Monomere I + II: 0,05 bis 0,5,
- Monomere VI/Monomere I + II: 0 bis 0,4,
- Monomere VII/Monomere I + II: 0 bis 0,4,
- Monomere VIII/Monomere I + II: 0 bis 0,2 und
für die Summe der Monomeren III bis VIII/Monomere I+II 0,80 bis 1,25 betragen, die Gesamtmenge aus Monomeren I und Monomeren II 50 bis 100 Mol-% an Monomeren I enthält und pro Kilogramm Polyurethan A in der wässrigen Zubereitung 50 bis 2000 mmol der Carboxygruppen der eingebauten Monomeren V anionisch vorliegen und die dispers verteilten Polyurethan-Partikel eine Teilchengröße von 2-15 µm aufweisen.

Außerdem betrifft die Erfindung das Verfahren zur Herstellung dieser Zubereitungen als Beschichtungsmittel, besonders für Beschichtungen, die einen geringen Glanzgrad sowie eine geringe Rückpolierbarkeit aufweisen.

Als Monomere I, deren organisches Grundgerüst keine laterale Alkylgruppe aufweist, kommen Mono-, Di- oder Polyisocyanate oder Gemische davon in Betracht, bevorzugt die aliphatischen Diisocyanate Hexamethylendiisocyanat und 4,4' -Diisocyanato-dicyclohexylmethan,

Als Monomere II, deren organisches Grundgerüst wenigstens eine laterale Alkylgruppe aufweist, kommen Mono-, Di- oder Polyisocyanate oder Gemische davon in Betracht, bevorzugt sind Isocyanate wie Trimethylhexandiisocyanat, 1-Isocyanato-3,3,5-trimethyl-5-isocyanatomethylcyclohexan (IPDI), 2,4-Diisocyanatotoluol, 2,6-Diisocyanatotoluol, Tetramethylxylylendiisocyanate, sowie davon abgeleitete Carbodiimid-, Allophanat-, Isocyanurat-, Urethan- oder Biuretgruppen aufweisende Polyisocyanate verstanden. Bevorzugt sind Diisocyanate, unter denen die aliphatischen Diisocyanate, insbesondere das 1-Isocyanato 3,3,5-trimethyl-5-isocyanatomethylcyclohexan und die Trimethylhexandiisocyanate, besonders bevorzugt werden. Vorzugsweise enthalten die lateralen Alkylgruppen der Monomeren II 1 bis 3 C-Atome, besonders bevorzugt 1 C-Atom pro lateraler Alkylgruppe.

Werden bei den Monomeren I oder II Monoisocyanate mitverwendet, wird deren Anteil vorzugsweise so bemessen, dass sie zur Gesamtmenge der Isocyanatgruppen innerhalb der Monomeren I bzw. II jeweils höchstens 10 Mol-% an Isocyanatgruppen beitragen. In vorteilhafter Weise weisen sowohl die Monomeren I als auch die Monomeren II eine mittlere NCO-Funktionalität von 2 auf. Besonders vorteilhaft sind Monomerenmischungen I und/oder II, die ausschließlich aus Diisocyanaten zusammengesetzt sind. Ferner enthält die Gesamtmenge aus Monomeren I und II vorzugsweise 50 bis 100, besonders bevorzugt 70 - 100, ganz besonders bevorzugt mehr als 90 bis einschließlich 100, insbesondere 95 bis 100 und außergewöhnlich bevorzugt 100 Mol-% an Monomeren I.

Geeignete Monomere III sind insbesondere zwei- oder mehrwertige Polyesterpolyole und Polyetherpolyole, wobei die zweiwertigen bevorzugt sind. Als Polyesterpolyole kommen vor allem die an sich bekannten Umsetzungsprodukte von mehrwertigen Alkoholen mit mehrbasischen Carbonsäuren in Betracht, wobei die alkoholische Komponente im Überschuss eingesetzt wird. Die mehrbasischen Carbonsäuren können aliphatischer, cycloaliphatischer, aromatischer, heterocyclischer oder ethylenisch ungesättigter Natur sein sowie gegebenenfalls Halogenatome als Substituenten tragen. Anstelle der mehrbasischen Carbonsäuren können auch deren Anhydride verestert werden. Als Beispiele für geeignete mehrbasische Ausgangscarbonsäuren seien genannt: Bernsteinsäure, Adipinsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsaureanhydrid, Endomethylentetrahydrophthalsäureanhydrid, Glutarsäureanhydrid, Maleinsäure, Maleinsäureanhydrid oder Fumarsäure. Als im Überschuss einzusetzende mehrwertige Alkohole seien genannt;

Ethandiol-(1,2), Propandiol-(1,2), Propandiol-(1,3). Butandiol-(1,2), Butandiol-(1,3), Butandiol-(1,4), Butendiol-(1,4), Butindiol-(1,4), Pentandiol-(1,5) und seine Stellungsisomeren, Hexandiol-(1,6), Octandiol-(1,8), 1,4-Bishydroxymethylcyclohexan, 2,2-Bis-(4-hydroxycyclohexyl)propan, 2-Methyl-1,3-propandiol, Glycerin, Trimethylolpropan, Trimethylolethan, Hexantriol-(1,2,6), Butantriol-(1,2,4), Diethylenglycol, Triethylenglycol, Tetraethylenglycol, Polyethylenglycol mit einer Molmasse von 378 bis 900, bevorzugt von 378 bis 678, Poly-1,2-propylenglycol oder Poly-1,3-propandiol mit einer Molmasse von 134 bis 1178, bevorzugt 134 bis 888, Poly-THF mit einer Molmasse von 162 bis 2000, bevorzugt zwischen 378 und 1458, besonders bevorzugt 378 bis 678.

Bevorzugt sind Polyesterpolyole aus Diolen und Dicarbonsäuren. Ferner eignen sich als Polyesterpolyole die Anlagerungsprodukte von Lactonen bzw. Lactongemischen an als Startermoleküle eingesetzte zweiwertige Alkohole. Beispiele für bevorzugte Lactone sind ε-Caprolacton, β-Propiolacton, γ-Butyrolacton oder Methyl-ε-caprolacton.

Geeignete Startermoleküle sind insbesondere die bereits als Aufbaukomponenten für die Polyesterpolyole genannten niedermolekularen zweiwertigen Alkohole.

Selbstverständlich eignen sich auch Polyester aus Hydroxycarbonsäuren als Monomere III. Ferner sind auch Polycarbonate, wie sie z.B. aus Phosgen oder Diphenylcarbonat und den als Aufbaukomponenten für die Polyesterpolyole genannten niedermolekularen zweiwertigen Alkoholen im überschuss erhältlich sind, als Polyester geeignete Monomere III.

Als als Polyetherpolyole geeignete Monomere III kommen vorzugsweise Polyetherdiole in Betracht, wie sie z. B. durch Bortrifluorid katalysierte Verknüpfung von Ethylenoxid, Propylenoxid, Butylenoxid, Tetrahydrofuran, Styroloxid oder Epichlorhydrin mit sich selbst oder untereinander, oder durch Anlagerung dieser Verbindungen, einzeln oder im Gemisch, an Starterkomponenten mit reaktionsfähigen Wasserstoffatomen wie Wasser, mehrwertigen Alkoholen oder Aminen wie Ethandiol-(1,2), Propandiol-(1,3), 1,2- oder 2,2-Bis-(4-hydroxyphenyl)propan oder Anilin erhältlich sind, in Betracht. Weiterhin sind Polyether-1,3-Diole, z. B. das an einer OH-Gruppe alkoxylierte Trimethylolpropan, dessen Alkylenoxidkette mit einem 1 bis 18 C-Atome enthaltenden Alkylrest abgeschlossen ist, vorzugsweise eingesetzte Monomere III.

Monomere IV können zwei- oder mehrwertige Alkohole sein, unter denen die zweiwertigen bevorzugt sind.

Als Monomere IV kommen unter anderen die als Aufbaukomponenten für die Polyesterpolyole III genannten niedermolekularen Polyole sowie mehrwertige Alkohole wie Trimethylolbutan, Trimethylolpropan, Trimethylolethan, Neopentylglykol, Hydroxypivalinsäureneopentylglykolester, Pentaerythrit, 2-Ethyl-1,3-Propandiol, 2-Methyl-1,3-Propandiol, 2-Ethyl-1,3-Hexandiol, Glycerin, Ditrimethylolpropan, Dipentaerythrit, Hydrochinon, Bisphenol A, Bisphenol F, Bisphenol B, Bisphenols, 2,2-His(4-hydroxycyclohexyl)propan, 1,1-, 1,2-, 1,3- und 1,4-Cyclohexandimethanol, 1,2-, 1,3- oder 1,4-Cyclohexandiol oder Zuckeralkohole wie Sorbit, Mannit, Diglycerol, Threit, Erythrit, Adonit (Ribit), Arabit (Lyxit), Xylit, Dulcit (Galactit), Maltit oder Isomalt in Betracht. Vorzugsweise werden lineare 1,ω-Dihydroxyalkane, besonders bevorzugt Butandiol-(1,4) und Hexandiol-(1,6), in Polyurethan A eingebaut. Besonders bevorzugt bestehen sowohl die Monomeren III als auch die Monomeren IV ausschließlich aus zweiwertigen Alkoholen. In vorteilhafter Weise werden die Mengen der in das wenigstens eine Polyurethan A eingebauten Monomeren III und IV so bemessen, dass das molare Verhältnis ihrer alkoholischen -OH Gruppen (IV : III) 1 bis 8, bevorzugt 2 bis 6 beträgt.

Wenigstens eine Hydroxygruppe (-OH) aufweisende Carbonsäuren [Monomer V] sind solche Verbindungen, die mindestens eine, bevorzugt ein bis drei, besonders bevorzugt ein bis zwei und ganz besonders bevorzugt eine Carboxyfunktion (-COOH) oder deren anionische Formen, denen ein beliebiges Gegenion oder mehrere assoziiert sein kann, z,B. Li⁺, Na⁺, K⁺, Cs⁺, Mg²⁺, Ca²⁺ oder Ba²⁺. Weiterhin können als Gegenion die von Ammoniak oder Aminen, insbesondere tertiären Aminen,abgeleiteten Ammoniumionen oder quartäre Ammoniumionen, wie z.B. Ammonium, Methylammonium, Dimethylammonium, Trimethylammonium, Ethylammonium, Diethylammonium, Triethylammonium, Tributylammonium, Di-*iso*-Propyl-ethyl-ammonium, Benzyldimethylammonium, Monoethanolammonium, Diethanolammonium, Triethanolammonium, Hydroxyethyl-Dimethylammonium, Hydroxyethyl-Diethylammonium, Monopropanolammonium, Dipropanolammonium, Tripropartolammonium, Piperidinium, Piperazinium, N,N'-Dimethylpiperazinium, Morpholinium, Pyridinium, Tetramethylammonium, Triethylmethylammonium, 2-Hydroxyethyl-Trimethylammonium, Bis-(2-Hydroxyethyl)-dimethylammonium, Tris-(2-Hydroxyethyl)-methylammonium, als Gegenion assoziiert sein.

Bevorzugt ist Ammonium als Gegenion. Liegen mehrere verschiedene Gegenionen vor, so beträgt der Anteil von Ammoniumionen unter diesen bevorzugt 50 bis 100 Mol%, besonders bevorzugt 75 - 100 Mol%, ganz besonders bevorzugt 90 - 100 und insbesondere 100 Mol%.

Die wenigstens eine Hydroxygruppe aufweisenden Carbonsäuren können aliphatisch, cycloaliphatisch oder aromatisch sein, verzweigt oder unverzweigt und gegebenenfalls substituiert.

Besonders bevorzugte Monomere V weisen 2 bis 6 Kohlenstoffatome auf, ganz besonders bevorzugt 3 bis 5 und insbesondere 4 bis 5.

Beispiele für Monomere V sind Hydroxyessigsäure, Weinsäure, Milchsäure, 3-Hydroxypropionsäure, Dimethylolpropionsäure, Dimethylolbuttersäure, Trimethylolessigsäure, Hydroxypivalinsäure oder Zuckersäuren wie Gluconsäure, Glucarsäure, Glucuronsäure, Galacturonsäure oder Schleimsäure (Galactarsäure), bevorzugt sind Milchsäure, Dimethylolpropionsäure, Dimethylolbuttersäure, Trimethylolessigsäure, Hydroxypivalinsäure und Glucuronsäure, besonders bevorzugt sind Milchsäure und Dimethylolpropionsäure und ganz besonders bevorzugt ist Dimethylolpropionsäure.

Die Monomere V können auch als Gemisch verwendet werden.

Vorzugsweise enthalten die erfindungsgemäßen Polyurethanzubereitungen Polyurethane A, in denen in der wässrigen Zubereitung pro Kilogramm Polyurethan A 70 bis 1000 und besonders bevorzugt 100 bis 700 mMol der Carbonsäuren der eingebauten Monomeren V ionisiert, d.h. in der anionischen Form vorliegen.

Die Monomeren VI weisen vorzugsweise ein Molekulargewicht von 32 bis 500, vorzugsweise von 60 bis 300, auf. Es handelt sich ausschließlich um Polyamine, die keine tertiären Aminogruppen aufweisen. Beispiele für geeignete Monomere VI sind Diamine wie 1,2-Diaminoethan, 1,6-Diaminohexan, Piperazin, 2,5-Dimethylpiperazin, 1-Amino-3-aminomethyl-3,5,5-trimethylcyclohexan (IPDA), 4,4'-Di(aminocyclohexyl)-methan, 1,4-Diaminocyclohexan, 1,2- und 1,3-Diaminopropan, Hydrazin, Hydrazinhydrat, Triamine wie Diethylentriamin oder Tetramine wie N,N' -Bis- (3-aminopropyl) 1,4-diaminobutan. Als Monomere VI kommen aber auch Ketimine, wie sie in der DE-B 27 25 589 beschrieben sind, Ketazine, wie diejenigen der DE-B 28 11 148 und der US-A 42 69 748, Aminsalze wie diejenigen in der US-A 42 92 226 oder Oxazolidine, wie sie in der DE-B 27 32 131 und der US-A 41 92 937 beschrieben werden, in Betracht. Hierbei handelt es sich um maskierte Polyamine, aus denen in Gegenwart von Wasser intermediär die entsprechenden Polyamine freigesetzt werden.

Bevorzugt werden als Monomere VI Ethylendiamin, 1-Amino-3-aminomethyl-3,5,5-trimethylcyclohexan (IPDA) und 4,4'-Di (aminocyclohexyl) -methan verwendet, besonders bevorzugt wird 1-Amino-3-aminomethyl-3,5,5-trimethyleyclohexan (IPDA) verwendet.

Das (-OH + >N-H) /NCO-Äquivalentverhältnis beträgt erfindungsgemäß für die eingesetzten Monomere VI/ (I + II) 0 bis 0,4, bevorzugt 0 bis 0,2 und besonders bevorzugt 0,02 bis 0,2.

Als Monomere VII kommen insbesondere Aminoalkohole wie Ethanolamin, Isopropanolamin, Methylethanolamin sowie Aminoethoxyethanol in Betracht.

Die Monomeren VIII weisen vorzugsweise ein zahlenmittleres Molekulargewicht von 500 bis 10000, besonders bevorzugt von 1000 bis 5000, auf. Sie sind üblicherweise durch Alkoxylierung von niedermolekularen einwertigen Startermolekülen wie Methanol, Ethanol oder n-Butarlol erhältlich, wobei als Alkoxylierungsmittel vorzugsweise Ethylenoxid oder Gemische von Ethylenoxid mit anderen Alkylenoxiden, insbesondere Propylenoxid, eingesetzt werden. Im Falle einer Alkoxylierung mit Alkylenoxidgemischen enthalten diese mit Vorteil wenigstens 40, mit besonderem Vorteil wenigstens 65 Mol-% Ethylenoxid. Der Gewichtsanteil der Monomeren VIII, bezogen auf die Gesamtmenge der eingebauten Monomeren, soll zweckmäßigerweise 10 Gew.-% nicht übersteigen.

Weitere Beispiele von für den Aufbau der Polyurethane A geeigneten Monomeren I bis VIII sind z. B. in High Polymers, Vol. XVI, "Polyurethanes, Chemistry and Technology", Interscience Publishers, New York, Bd. 1, 1962, S. 32 bis 42, S. 44 bis 54 und Bd. II, 1964, S. 5 bis 6 und S. 198 bis 199 beschrieben. Vorzugsweise enthalten die Polyurethane A nur solche Monomeren I bis VIII eingebaut, die zwei Isocyanatgruppen oder zwei mit Isocyanatgruppen reaktionsfähige Gruppen aufweisen. Mit Vorteil werden die Monomeren I bis VIII in solchen Mengen in das wenigstens eine Polyurethan A eingebaut, dass der Gesamtzahl der Isocyanatgruppen eine etwa äquivalente Gesamtzahl an mit Isocyanatgruppen reaktionsfähigen Hydroxy- und Aminogruppen gegenübersteht. Vorzugsweise beträgt das Äquivalentverhältnis 0, 9 bis 1,11 und besonders bevorzugt 0,95 bis 1,05.

Die Herstellung der erfindungsgemäßen wässrigen Polyurethanzubereitungen erfolgt zweckmäßigerweise so, dass man die Monomeren I bis V sowie gegebenenfalls die Monomeren VII und VIII in der Schmelze oder in Gegenwart eines inerten, mit Wasser mischbaren Lösungsmittels wie Aceton, Tetrahydrofuran, Butanon, Diethylketon, cyclische oder offenkettige Carbonate oder N-Methylpyrrolidon bei Temperaturen von 20 bis 160, bevorzugt 50 bis 100°C umsetzt, wobei die Reaktionsdauer üblicherweise 2 bis 10 h beträgt . Durch die Mitverwendung von in an sich bekannter Weise katalytisch wirksamen Substanzen wie Dibutylzinndilaurat, Zinn-(II)-octoat oder 1,4-Diazobicyclo-(2,2,2)-octan, normalerweise in Mengen von 10 bis 100 ppm, bezogen auf die lösungsmittelfreie Reaktionsmischung, kann die Umsetzung beschleunigt werden. Anschließend wird gegebenenfalls mit einem mit Wasser mischbaren Lösungsmittel verdünnt, ionogene Gruppen der Monomeren V durch Neutralisation gegebenenfalls ionisiert, Wasser zugegeben und gegebenenfalls die Monomeren VI eingerührt. Danach werden üblicherweise die gegebenenfalls mitverwendeten organischen Lösungsmittel abdestilliert, weshalb solche Lösungsmittel bevorzugt sind, deren Siedepunkt unterhalb des Siedepunktes von Wasser liegt. Werden Monomere VI in das Polyurethan A miteingebaut, so erfolgt ihre Zugabe zu der das aus den übrigen Monomeren aufgebaute Polyurethan enthaltenden wässrigen Reaktionsmischung, vorzugsweise durch Einrühren bei Temperaturen von 20 bis 50°C. Gegebenenfalls können die Monomere VI auch vor der Dispergierung mit Wasser zugegeben werden.

Die zugegebene Wassermenge wird üblicherweise so bemessen, dass die erfindungsgemäßen wässrigen Polyurethanzubereitungen einen Feststoffgehalt von 10 bis 80 Gew.-% aufweisen. Die in den Zubereitungen enthaltenen Polyurethane weisen, abgesehen von in N,N-Dimethylformamid (DMF) unlöslichen Vertretern, in DMF in der Regel einen K-Wert von 20 bis 80 auf. Der K-Wert ist eine relative Viskositätszahl, die in Analogie zur DIN 53 726 bei 23 °C bestimmt wird.
Er enthält die Fließgeschwindigkeit einer 1 gew.-%igen Lösung des Polyurethans in DMF, relativ zur Fließgeschwindigkeit von reinem DMF und charakterisiert das mittlere Molekulargewicht des Polyurethans.

Bei der Herstellung wässriger Polyurethan-Dispersionen wird die Additionsreaktion, d.h. die Umsetzung der einzelnen Monomere untereinander,häufig unter Verwendung von Katalysatoren durchgeführt. Hierbei haben sich insbesondere organische Verbindungen des Zinns wie zum Beispiel Dibutylzinndilaurat oder Zinn-(II)-octanoat gut bewährt. Es ist jedoch bekannt, dass derartige organische Verbindungen des Zinns u.a. eine hohe Toxizität aufweisen und sich wegen ihrer schlechten Abbaubarkeit in unerwünschter Weise in der Umwelt anreichern. Die üblicherweise verwendeten Diorganylverbindungen des Zinns sind zwar weniger gefährlich als die sogenannten Triorganylverbindungen des Zinns, jedoch enthalten käufliche Präparate von Diorganylverbindungen des Zinns aufgrund der speziellenHerstellung stets auch gewisse Anteile an Triorganylverbindungen des Zinns. Alternativ werden auch andere metallorganische Verbindungen, d.h. solche mit mindestens einer kovalenten Metall-Kohlenstoff-Hindung, als Katalysatoren eingesetzt, beispielsweise Wismutorganyle.

Erfindungsgemäß wird bevorzugt auf Katalyse von jeglichen Metallorganylen verzichtet.

Die Polyaddition der oben genannten Monomere zur Herstellung der erfindungsgemäßen Polyurethanzubereitung kann besonders bevorzugt in Anwesenheit von Cäsiumsalzen erfolgen, wie in der älteren deutschen Patentanmeldung mit dem Aktenzeichen 10161156.0 vom 12.12.2001 beschrieben. Bevorzugte Cäsiumsalze sind dabei Verbindungen, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂), (CₙH₂ₙ₋₃O₂)⁻ sowie (Cₙ₊₁H₂ₙ₋₂O₄)²⁻, wobei n für die Zahlen 1 bis 20 steht.

Besonders bevorzugt sind dabei Cäsiumcarboxylate, bei denen das Anion den Formeln (CₙH₂ₙ-₁O₂)⁻ sowie (Cₙ₊₁H₂ₙ₋₂O₄)²⁻ mit n gleich 1 bis 20, gehorcht. Ganz besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht, Hierbei sind insbesondere zu erwähnen Formiat, Acetat, Propionat, Hexanoat und 2-Ethylhexanoat.

Die Cäsiumsalze werden in Mengen von 0,01 bis 10 mmol Cäsiumsalz pro kg lösungsmittelfreier Ansatz eingesetzt. Bevorzugt werden sie in Mengen von 0, 05 bis 2 mmol Cäsiumsalz pro kg lösungsmittelfreier Ansatz verwendet.

Die Cäsiumsalze können dem Ansatz in fester Form, bevorzugt jedoch in gelöster Form zugesetzt werden. Als Lösemittel sind polare, aprotische Lösemittel oder auch protische Lösemittel geeignet. Besonders geeignet sind neben Wasser auch Alkohole; ganz besonders geeignet sind Polyole, wie sie auch sonst als Bausteine für Polyurethane verwendet werden, wie z.B. Ethan-, Propan- und Butandiole. Die Verwendung der Cäsiumsalze erlaubt es, die Polyaddition unter den Üblichen Bedingungen zu führen.

Im Anschluss an die Umsetzung zum Polymer erfolgt bevorzugt eine Neutralisierung bis zu dem oben angegebenen Neutralisierungsgrad, in Analogie zu dem Verfahren, wie es in der älteren deutschen Patentanmeldung mit dem Aktenzeichen 10127208,1 vom 5.6.2001 beschrieben ist. Hierfür ist insbesondere Ammoniak geeignet.

Der Gehalt an COO⁻ NH₄⁺ nach der Neutralisierung sollte dabei beispielsweise 50 bis 2000 mmol, bevorzugt von 100 bis 600 mmol/kg, besonders bevorzugt von 200 bis 500 und ganz besonders bevorzugt von 250 bis 500 mmol/kg liegen.

Nach der Neutralisation wird dann mit Wasser dispergiert und ggf. Lösemittel abdestilliert. Durch die Zugabe von Wasser und das anschließende Entfernen des Lösemittels durch Destillation lässt sich insbesondere die gewünschte Feststoffkonzentration einstellen.

Durch die besondere Auswahl der Rohstoffe und ihrer Mengenverhältnisse enthalten die erfindungsgemäßen Polyurethanzubereitungen in der Polyurethan-Matrix unlösliche Partikel, deren mittlerer Durchmesser 2 - 15, ganz besonders bevorzugt 3 - 10 und insbesondere 3 bis 7 µm beträgt.

Wässrige Polyurethandispersionen, die Partikel mit größeren Teilchendurchmessern enthalten, sind nicht stabil und zeigen auf Leder einen rauen Griff; kleinere Teilchendurchmesser zeigen keine Mattierungswirkung.

Die Polyurethan-Dispersionen können handelsübliche Hilfs- und Zusatzstoffe wie Treibmittel, Entschäumer, Emulgatoren, Verdickungsmittel, Vernetzer und Thixotropiermittel, Farbmittel wie Farbstoffe und Pigmente enthalten.

Die erfindungsgemäßen wässrigen Polyurethanzubereitungen eignen sich in vorteilhafter Weise als Bindemittel für Massen zum Beschichten, wenn aus technischen oder ästhetischen Gründen Beschichtungen mit reduziertem Oberflächenglanz erwünscht sind. Geeignete Substrate sind Textil, Leder, Metall, Kunststoff, Glas, Holz, Papier oder Pappe, bevorzugte Substrate sind Textilien und Leder, besonders bevorzugt ist Leder. Bemerkenswerterweise weisen die bei Verwendung der erfindungsgemäßen wässrigen Polyurethanzubereitungen als Bindemittel erhältlichen Beschichtungen neben reduziertem Glanz eine erhöhte Abriebfestigkeit, Wasserbeständigkeit, Elastizität, geringe Rückpolierbarkeit, hohe Farbtiefe und einen angenehmen, warmen, weichen, ("schmalzigen") Griff auf. Mit besonderem Vorteil eignen sich die erfindungsgemäßen wässrigen Polyurethanzubereitungen daher als Bindemittel für Abschlussbeschichtungen auf Leder, die mit handelsüblichen Grundiermitteln vorbehandelt sein können, besonders Automobilleder und Polsterleder. Die erfindungsgemäßen wässrigen Zubereitungen können dabei für sich oder im Gemisch mit anderen Bindemitteln sowie üblichen Hilfsmitteln eingesetzt werden. Durch Abmischen mit anderen Bindemitteln, z.B. anderen
Polyurethan-Dispersionen, kann der Glanzgrad auf ein gewünschtes Niveau eingestellt werden. Sie können durch Sprühen, Spritzen, Gießen, Rakeln, Tränkung oder in Form eines Films auf diese Gegenstände aufgetragen und anschließend getrocknet werden. Zweckmäßigerweise werden die erfindungsgemäßen wässrigen Zubereitungen mit einem Feststoffgehalt von 10 bis 75, bevorzugt von 20 bis 65 Gew,-% und einer Viskosität von 10 bis 1500 m Pas (gemessen bei einer Temperatur von 20°C und einer Schergeschwindigkeit von 250 s⁻¹) aufgetragen.

Der Einsatz der erfindungsgemäßen wässrigen Polyurethanzubereitungen als Bindemittel in Grundierbeschichtungen ist ebenfalls möglich.

Die mit den erfindungsgemäßen Polyurethanzubereitungen erhältlichen Beschichtungen zeichnen sich durch eine geringe Rückpolierbarkeit und einen angenehmen, warmen, weichen ("schmalzigen") Griff aus.

In dieser Schrift verwendete ppm- und Prozentangaben beziehen sich, falls nicht anders angegeben, auf Gewichtsprozente und -ppm.

### Beispiele

### Vergleichsbeispiel

Eine Mischung aus 394 kg eines Polyesterdiols aus Adipinsaure, Neopentylglycol undHexandiol-(1,6) (Hydroxylzahl 56 gemäß DIN 53 240), 90 kg Butandiol-(1,4), 0,1 kg Dibutylzinndilaurat, 72,5 kg 1-Isocyanato-3,3,strimethyl-5-isocyanatomethylcyclohexan und 258,2 kg 4,4'-Diisocyanato-dicyclohexylmethan wurde während 3 h bei 70°C umgesetzt. Anschließend wurde mit 1000 kg Aceton verdünnt und auf 50°C abgekühlt. Anschließend wurden bei 50°C 48 kg einer 40 gew.-%igen wässrigen Lösung des Na-Salzes der N-(2-Aminoethyl)-2-aminoethancarbonsäure und 1250 kg Wasser eingerührt. Nach destillativer Entfernung des Acetons wurde eine ca. 40 gew-%ige wässrige Polyurethanzubereitung erhalten.

Die Dispersion zeigte bei Lagerung nach vier Wochen einen dicken Bodensatz, der durch Schütteln oder Rühren nicht wieder homogen verteilt werden konnte.

### 1. Herstellung einer erfindungsgemäßen Polyurethanzubereitung ZI:

In einem Rührkolben mit RiSckfZusskühler und Thermometer wurden 400 g (0,20 mol) Polytetrahydrofuran der OFi-Zahl 56, 40,2 g (0,30 mol) Dimethylolpropionsäure und 100 g Butanon unter Rühren auf 80°C gebracht. Hierzu wurden in einem Guss 168 g (1,00 mol) Hexamethylendiisocyanat (HDI) gegeben. Nach 15 Minuten wurden dem Ansatz 47, 2 g (0,40 mol) auf 45°C erwärmtes Hexandiol-1, 6 zugefügt. Nach 15 Minuten wurden 70 g Aceton zugesetzt und bei 80°C weitere 200 Minuten gerührt. Dabei wurde die ansteigende Viskosität durch sukzessive Zugabe von zuerst insgesamt 200 g Butanon, dann insgesamt 200 g Aceton reduziert. 210 Minuten nach der Zugabe des Hexandiol wurde mit weiteren 500 g Aceton verdünnt und auf 30°C gekühlt. Der NCO-Gehalt der verdünnten Lösung wurde zu 0, 49 Gew.% bestimmt (berechnet: 0,49 Gew.%). Dann wurden 17,0 g (0,1 mol) Isophorondiamin (IPDA) zugegeben und 60 Minuten bei 30°C gerührt. Nach Zugabe einer Lösung von 18 g 25 %igem wässrigem Ammoniak in 80 g Wasser wurde durch Zugabe von 1300 g Wasser dispergiert und Aceton und Butanon im Vakuum abdestilliert.

Man erhielt eine wässrige Polyurethan-Dispersion mit einem Feststoffgehalt von 33 Gew.%.

Die Dispersion zeigte auch bei Lagerung über vier Wochen nur einen geringen Bodensatz, der durch Schütteln oder Rühren leicht wieder homogen verteilt werden konnte.

Ein dünner Film, der auf einen Objektträger aufgezogen wurde, zeigte unter dem Lichtmikroskop Partikel, deren mittlerer Durchmesser zu ca. 6 µm ausgemessen wurde.

### 2. Anwendung der erfindungsgemäßen PUD als Bindemittel für Beschichtungen

a) Automobilledercrust wurde mit einer handelsüblichen Grundierung bestehend aus 250 g Wasser, 150 g Lepton® Schwarz N (BASF AG, Ludwigshafen), 100 g Luron® Mattierung (BASF AG, Ludwigshafen), 50 g Lepton® Filler CEN (BASFAG, Ludwigshafen), 50 g Lepton Mattierung MF (BASF AG, Ludwigshafen), 100 g Corialgrund® DN (BASFAG, Ludwigshafen), 250 g Astacin®Finish PUMN TF (BASF AG, Ludwigshafen) und 50 g Astacin® Finish PFM TF (BASF AG, Ludwigshafen) grundiert (Auftragsmenge: 1 Kreuz im Spritzauftrag), getrocknet, bei 80°C mit 200 bar 1,5 s lang geprägt und 3 Stunden lang gemillt.
   Als Deckfarbe wurde eineMischung aus 300 g Wasser, 150 g Lepton® Schwarz N (BASFAG, Ludwigshafen), 100 g Luron Mattierung (BASF AG, Ludwigshafen), 50 g Lepton® Filler CEN (BASF AG, Ludwigshafen), 50 g Lepton Mattierung MF (BASF AG, Ludwigshafen), 100 g Corialgrund® DN (BASF AG, Ludwigshafen), 250 g Astacin® Finish PUMN TF (BASF AG, Ludwigshafen), 100 g Astacin® Finish PFM TF (BASF AG, Ludwigshafen) und 30 g Astacin® Härter CN (BASF AG, Ludwigshafen) im Spritzauftrag aufgebracht (Auftragsmenge: 1 Kreuz).
   Anschließend wurde ein Gemisch aus 380 g Wasser, 10 g Lepton® Schwarz N (HASF AG, Ludwigshafen), 40 g Lepton® Wachs WA (BASF AG, Ludwigshafen), 60 g Astacin® Härter CN (BASF AG, Ludwigshafen) und 500 g Z1 (BASF AG, Ludwigshafen), bei dem die Viskosität mit Lepton® Paste VL (BASF AG, Ludwigshafen) auf 25s Auslaufzeit im DIN-Becher 4 mm bei 23 °C gemäß DIN 53211 eingestellt worden war, im Spritzauftrag aufgebracht (Auftragsmenge: 2 Kreuz, Zwischentrocknung und abschließende Trocknung bei 80°C im Trockenkanal).
   Reibechtheit nach IUF 450 (DIN EN ISO 11640), nasses Leder: keine Beschädigungen nach 500 Vorgängen,
   Reibechtheit nach IFU 450, trockenes Leder: keine Beschädigung nach 2000 Vorgängen
   Quellfestigkeit, Filz trocken gemäß IUF 450: keine Beschädigung nach 2000 Vorgängen
   Benzinreibechtheit gemäß IUF 450 : keine Beschädigung und keine Verfärbung nach 10 Reibungen
   Dauerbiegefestigkeit gemäß IUP20 (DIN EN 13334): trockenes Leder: keine Beschädigung nach 100.000 Vorgängen
   nasses Leder: keine Beschädigung nach 20.000 Vorgängen
   bei -10°C: keine Beschädigung nach 30.000 Vorgängen
   Taber Test CS 10 (1000 g Belastung) (DIN 53109): keine Beschädigung nach 1000 Touren
   Nach optischer Begutachtung konnte nach 2000 Trockenreibungen keinerlei Rückpolierbarkeit festgestellt werden.
b) Automobilledercrust wurde mit einer handelsüblichen Grundierung bestehend aus 350 g Wasser, 120 g Lepton® Schwarz N, 200 g Lepton® Filler CEN, 250 g Corialgrund® BAN, und 150 g Astacin ® Finish SUSI TF grundiert (Auftragsmenge: 20 g Trockenmasse/m²).
   Anschließend wurde ein Gemisch aus 157 g Wasser, 3 g Lepton® Wachs WA, 18 g Astacin® Härter CN und 122 g 21 aufgetragen (2 g nass/DIN A4), bei 80°C 5 Minuten im Umluftschrank getrocknet, nochmals die gleiche Menge des Gemisches aufgetragen und abermals getrocknet.
   Man erhielt ein beschichtetes Leder mit folgenden Eigenschaften:
   Glanzgrad 20°: 0,1 1 60°: 0,5 85°: 0,4
   gemessen mit einem Glanzmessgerät REFO 3D der Fa. Lange gemäß Bedienungsanleitung.
   Zur Beurteilung der Rückpolierbarkeit wurde der Glanzgrad der Reibspur gemäß IUF 450 nach 2000 Vorgängen auf trockenem Leder gemessen.
   Glanzgrad nach 2000 Reibungen: 60°: 0,5 85°: 0,6
   Wie ersichtlich, war die erfindungsgemäße Polyurethanzubereitung nicht nur bezüglich der mechanischen Eigenschaften, sondern auch in puncto Rückpolierbarkeit hervorragend zur Beschichtung von Leder geeignet.
   Es können extrem stark mattierte, nicht rückpolierbare Zurichtungen mit ausgezeichneter Schwarztiefe erreicht werden.

## Patentansprüche

1. Wässrige Polyurethanzubereitungen, enthaltend 10 bis 60 Gew.-% wenigstens eines Polyurethans A, das aufgebaut ist aus
a) wenigstens einem keine lateralen Alkylgruppen aufweisenden organischen Isocyanat [Monomere I],
b) gegebenenfalls wenigstens einem wenigstens eine laterale Alkylgruppe aufweisenden organischen Isocyanat [Monomere II],
c) wenigstens einem mindestens zweiwertigen Alkohol eines zahlenmittleren Molekulargewichts von 400 bis 6000 [Monomere III],
d) wenigstens einem mindestens zweiwertigen Alkohol eines zahlenmittleren Molekulargewichts von 62 bis 399 [Monomere IV],
e) wenigstens einer wenigstens eine Hydroxygruppe aufweisende Carbonsäure [Monomere V],
f) keinem, einem oder mehreren wenigstens zwei >N-H-Gruppen aufweisenden Polyaminen [Monomere VI],
g) keiner, einer oder mehreren wenigstens eine alkoholische OH-Gruppe und wenigstens eine >N-H-Gruppe aufweisenden Verbindung [Monomere VII] und
h) keinem, einem oder mehreren einwertigen Polyetheralkoholen [Monomere VIII]
mit der Maßgabe, daß die Mengen der eingebauten Monomeren I bis VIII so bemessen sind, daß die
(-OH + >N-H)/NCO-Äquivalentverhältnisse für die eingebauten
Monomere 111/Monomere I+II 0,1 bis 0,75,
Monomere IV/Monomere I+II 0,2 bis 0,8,
Monomere V/Monomere I + II 0,05 bis 0,5,
Monomere VI/Monomere I + II 0 bis 0,4,
Monomere VII/Monomere I + II 0 bis 0,4,
Monomere VIII/Monomere I + II 0 bis 0,2 und
für die Summe der Monomeren III bis VIII/Monomere (I+II) 0,80 bis 1,25 betragen, die Gesamtmenge aus Monomeren I und Monomeren II 50 bis 100 Mol-% an Monomeren I enthält und pro Kilogramm Polyurethan A in der wässrigen Zubereitung 50 bis 2000 mMol der Carboxygruppen der eingebauten Monomeren V anionisch vorliegen und die dispers verteilten Polyurethan-Partikel eine Teilchengröße von 2-15 µm aufweisen.

2. Wässrige Polyurethanzubereitungen gemäß Anspruch 1, **dadurch gekennzeichnet, dass** das Monomer I ausgewählt ist unter Hexamethylendiisocyanat (HDI) und 4,4'-Diisocyanato-dicyclohexylmethan.

3. Wässrige Polyurethanzubereitungen gemäß Anspruch 1 oder 2, **dadurch gekennzeichnet, dass** die Gesamtmenge an Monomeren I und II mehr als 90 bis einschließlich 100 Mol-% an Monomeren I enthält.

4. Wässrige Polyurethanzubereitungen gemäß einem der vorstehenden Ansprüche, **dadurch gekennzeichnet, dass** das Monomer V ausgewählt ist aus Milchsäure, Dimethylolpropionsäure, Dimethylolbuttersäure, Trimethylolessigsäure, Hydroxypivalinsäure und Glucuronsäure.

5. Wässrige Polyurethanzubereitungen gemäß einem der vorstehenden Ansprüche, **dadurch gekennzeichnet, dass** das Monomer V ausgewählt ist aus Milchsäure und Dimethylolpropionsäure.

6. Wässrige Polyurethanzubereitungen gemäß einem der vorstehenden Ansprüche, **dadurch gekennzeichnet, dass** das Monomer V Dimethylolpropionsäure ist.

7. Wässrige Polyurethanzubereitungen gemäß einem der vorstehenden Ansprüche, **dadurch gekennzeichnet, dass** das Monomer VI ausgewählt ist aus Ethylendiamin, 1-Amino-3-aminomethyl-3,5,5-trimethylcyclohexan und 4,4'-Di(aminocyclohexyl)-methan.

8. Wässrige Polyurethanzubereitungen gemäß einem der vorstehenden Ansprüche, **dadurch gekennzeichnet, dass** das Monomer VI 1-Amino-3-aminomethyl-3,5,5-trimethylcyclohexan ist.

9. Wässrige Polyurethanzubereitungen gemäß einem der vorstehenden Ansprüche, **dadurch gekennzeichnet, dass** das >N-H/NCO- Äquivalentverhältnis für die Monomere VI/Monomere (I + II) 0,02 bis 0,4 beträgt.

10. Wässrige Polyurethanzubereitungen gemäß einem der vorstehenden Ansprüche, **dadurch gekennzeichnet, dass** als Gegenion der Carboxygruppen der eingebauten Monomere V Ammonium NH₄⁺ vorliegt.

11. Wässrige Polyurethanzubereitungen gemäß einem der vorstehenden Ansprüche, **dadurch gekennzeichnet, dass** die Umsetzung der Monomere in Abwesenheit von Metallorganylen durchgeführt wird.

12. Wässrige Polyurethanzubereitungen gemäß einem der vorstehenden Ansprüche, erhältlich durch Umsetzung der Monomere in Anwesenheit eines Cäsiumsalzes.

13. Verwendung von wässrigen Polyurethanzubereitungen gemäß einem der vorstehenden Ansprüche zur Beschichtung von Textilien, Leder, Metall, Kunststoff, Glas, Holz, Papier oder Pappe.

14. Textilien, Leder, Metall, Kunststoff, Glas, Holz, Papier oder Pappe, beschichtet mit einer wässrigen Polyurethanzubereitungen gemäß einem Ansprüche 1 bis 12.

## Claims

1. An aqueous polyurethane formulation comprising from 10 to 60% by weight of at least one polyurethane A which is composed of
a) at least one organic isocyanate having no lateral alkyl groups [monomers I],
b) optionally, at least one organic isocyanate having at least one lateral alkyl group [monomers II],
c) at least one dihydric or polyhydric alcohol having a number average molecular weight of from 400 to 6000 [monomers III],
d) at least one dihydric or polyhydric alcohol having a number average molecular weight of from 62 to 399 [monomers IV],
e) at least one carboxylic acid having at least one hydroxyl group [monomers V],
f) no or one or more polyamines having at least two >N-H groups [monomers VI],
g) no or one or more compounds having at least one alcoholic OH group and at least one >N-H group [monomers VII] and
h) no or one or more monohydric polyetheralcohols [monomers VIII],
with the proviso that the amounts of the incorporated monomers I to VIII are such that the
(-OH + >N-H)/NCO equivalent ratios for the incorporated
monomers III/monomers I + II are from 0.1 to 0.75,
monomers IV/monomers I + II are from 0.2 to 0.8,
monomers V/monomers I + II are from 0.05 to 0.5,
monomers VI/monomers I + II are from 0 to 0.4,
monomers VII/monomers I + II are from 0 to 0.4,
monomers VIII/monomers I + II are from 0 to 0.2
and
those for the sum of the monomers III to VIII/monomers (I+II) are from 0.80 to 1.25, the total amount of monomers I and monomers II comprises from 50 to 100 mol % of monomers I and from 50 to 2000 mmol of the carboxyl groups of the incorporated monomers V per kilogram of polyurethane A are present in anionic form in the aqueous formulation and the dispersed polyurethane particles have a particle size of from 2-15 µm.

2. The aqueous polyurethane formulation according to claim 1, wherein the monomer I is selected from hexamethylene diisocyanate (HDI) and 4,4'-diisocyanatodicyclohexylmethane.

3. The aqueous polyurethane formulation according to claim 1 or 2, wherein the total amount of monomers I and II comprises from more than 90 up to and including 100 mol % of monomers I.

4. The aqueous polyurethane formulation according to any of the preceding claims, wherein the monomer V is selected from lactic acid, dimethylolpropionic acid, dimethylolbutyric acid, trimethylolacetic acid, hydroxypivalic acid and glucuronic acid.

5. The aqueous polyurethane formulation according to any of the preceding claims, wherein the monomer V is selected from lactic acid and dimethylolpropionic acid.

6. The aqueous polyurethane formulation according to any of the preceding claims, wherein the monomer V is dimethylolpropionic acid.

7. The aqueous polyurethane formulation according to any of the preceding claims, wherein the monomer VI is selected from ethylenediamine, 1-amino-3-aminomethyl-3,5,5-trimethylcyclohexane and 4,4'-di(aminocyclohexyl)methane.

8. The aqueous polyurethane formulation according to any of the preceding claims, wherein the monomer VI is I-amino-3-aminomethyl-3,5,5-trimethylcyclohexane.

9. The aqueous polyurethane formulation according to any of the preceding claims, wherein the >N-H/NCO equivalent ratio for the monomers VI/monomers (I + II) is from 0.02 to 0.4.

10. The aqueous polyurethane formulation according to any of the preceding claims, wherein ammonium NH₄⁺ is present as the opposite ion of the carboxyl groups of the incorporated monomers V.

11. The aqueous polyurethane formulation according to any of the preceding claims, wherein the reaction of the monomers is carried out in the absence of metal organyls.

12. The aqueous polyurethane formulation according to any of the preceding claims, obtainable by reacting the monomers in the presence of a cesium salt.

13. The use of the aqueous polyurethane formulation according to any of the preceding claims for coating textiles, leather, metal, plastic, glass, wood, paper or board.

14. A textile, leather, metal, plastic, glass, wood, paper or board coated with an aqueous polyurethane formulation according to any of claims 1 to 12.

## Revendications

1. Préparations aqueuses de polyuréthanne, contenant 10 à 60 % en poids d'au moins un polyuréthanne A, lequel est constitué :
a) d'au moins un isocyanate organique qui ne présente aucun groupe alkyle latéral (monomère I),
b) éventuellement, d'au moins un isocyanate organique qui présente au moins un groupe alkyle latéral (monomère II),
c) d'au moins un alcool au moins divalent ayant un poids moléculaire moyen en nombre de 400 à 6000 (monomère III),
d) d'au moins un alcool au moins divalent ayant un poids moléculaire moyen en nombre de 62 à 399 (monomère IV),
e) d'au moins un acide carboxylique présentant au moins un groupe hydroxyle (monomère V),
f) d'aucune, d'une ou de plusieurs polyamines présentant au moins deux groupes >N-H (monomère VI),
g) d'aucun, d'un ou de plusieurs composés présentant au moins un groupe OH alcoolique et au moins un groupe >N-H (monomère VII), et
h) d'aucun, d'un ou de plusieurs polyétheralcools monovalents (monomère VIII),
à condition que les quantités des monomères I à VIII incorporés soient calculées de sorte que les rapports d'équivalents (-OH + >N-H)/NCO se situent, pour les monomères incorporés suivants :
monomères III/monomères I + II de 0,1 à 0,75,
monomères IV/monomères I + II de 0,2 à 0,8,
monomères V/monomères I + II de 0,05 à 0,5,
monomères VI/monomères I + II de 0 à 0,4,
monomères VII/monomères I + II de 0 à 0,4,
monomères VIII/monomères I + II de 0 à 0,2, et
pour la somme des monomères III à VIII/monomères (I + II), de 0,80 à 1,25, que la quantité totale des monomères I et des monomères II contienne 50 à 100 % en mole de monomères I, que 50 à 2000 mmoles des groupes carboxyle provenant des monomères V incorporés se présentent, par kilogramme de polyuréthanne A, sous une forme anionique dans la préparation aqueuse, et que les particules de polyuréthanne dispersées présentent une taille particulaire de 2 à 15 µm.

2. Préparations aqueuses de polyuréthanne selon la revendication 1, **caractérisées en ce que** le monomère I est choisi parmi le diisocyanate d'hexaméthylène (HDI) et le 4,4'-diisocyanatodicyclohexylméthane.

3. Préparations aqueuses de polyuréthanne selon la revendication 1 ou 2, **caractérisées en ce que** la quantité totale des monomères I et II contient plus de 90 à 100 % inclus en mole de monomères I.

4. Préparations aqueuses de polyuréthanne selon l'une quelconque des revendications précédentes, **caractérisées en ce que** le monomère V est choisi dans le groupe constitué de l'acide lactique, de l'acide diméthylolpropionique, de l'acide diméthylolbutyrique, de l'acide triméthylolacétique, de l'acide hydroxypivalique et de l'acide glucuronique.

5. Préparations aqueuses de polyuréthanne selon l'une quelconque des revendications précédentes, **caractérisées en ce que** le monomère V est choisi parmi l'acide lactique et l'acide diméthylolpropionique.

6. Préparations aqueuses de polyuréthanne selon l'une quelconque des revendications précédentes, **caractérisées en ce que** le monomère V est l'acide diméthylolpropionique.

7. Préparations aqueuses de polyuréthanne selon l'une quelconque des revendications précédentes, **caractérisées en ce que** le monomère VI est choisi parmi l'éthylènediamine, le 1-amino-3-aminométhyl-3,5,5-triméthylcyclohexane et le 4,4'-di(aminocyclohexyl)méthane.

8. Préparations aqueuses de polyuréthanne selon l'une quelconque des revendications précédentes, **caractérisées en ce que** le monomère VI est le 1-amino-3-aminométhyl-3,5,5-triméthylcyclohexane.

9. Préparations aqueuses de polyuréthanne selon l'une quelconque des revendications précédentes, **caractérisées en ce que** le rapport d'équivalents >N-H/NCO pour le système monomères VI/monomères (I + II) est de 0,02 à 0,4.

10. Préparations aqueuses de polyuréthanne selon l'une quelconque des revendications précédentes, **caractérisées en ce que** l'on utilise l'ammonium NH₄⁺ comme contre-ion pour les groupes carboxyle des monomères V incorporés.

11. Préparations aqueuses de polyuréthanne selon l'une quelconque des revendications précédentes, **caractérisées en ce que** l'on effectue la réaction des monomères en l'absence de composés organométalliques.

12. Préparations aqueuses de polyuréthanne selon l'une quelconque des revendications précédentes, que l'on peut obtenir en faisant réagir les monomères en présence d'un sel de césium.

13. Utilisation de préparations aqueuses de polyuréthanne selon l'une quelconque des revendications précédentes, pour le revêtement de textiles, de cuir, de métal, de matériau synthétique, de verre, de bois, de papier ou de carton.

14. Textiles, cuir, métal, matériau synthétique, verre, bois, papier ou carton, revêtus d'une préparation aqueuse de polyuréthanne selon l'une quelconque des revendications 1 à 12.
